# EUROPEAN PATENT APPLICATION

(11) **EP 4 191 361 A1**
(43) Date of publication of application: **07.06.2023**
(21) Application number: 21880257.7
(22) Date of filing: 16.03.2021
(51) Int. Cl.: G05D 1/02, B25J 9/16, B25J 13/06

(54) **MULTI-ROBOT CONTROL SYSTEM AND METHOD**

(30) Priority: 15.10.2020 KR 20200133598
(71) Applicant: I-On Communications Co., Ltd., Seoul 06234 (KR)
(72) Inventor: PAIK, Kyoung Seok, Seoul 05267 (KR); OH, Jae Cheol, Seoul 06779 (KR)
(74) Representative: BCKIP Part mbB
(86) International application number: PCT/KR2021/003248
(87) International publication number: WO 2022/080605

(57) **Abstract**

The present invention relates to a multi-robot control system and method, and the multi-robot control method comprises the steps in which: a central control management server configures, into multiple groups, multiple robots to perform work at a site, and designates, as a leader robot, a certain robot included in each group; the central control management server calculates a work goal of each group on the basis of the entire work; and the central control management server transmits the calculated work goal of each group to the leader robot of each group so that the leader robot of each group distributes, to robots belonging to the corresponding group, detailed missions which the robots are required to perform on the basis of the calculated work goal of each group.

## Description

### Technical Field

The present invention relates to a system and a method for controlling multiple robots, and more particularly, to a system and a method for controlling multiple robots capable of controlling a plurality of robots with respect to a leader robot of a arbitrarily configured robot group.

### Background Art

In general, an autonomous mobile robot (AMR) refers to a robot that performs a task suitable for a given mission while autonomously traveling in logistics and manufacturing sites. The autonomous mobile robot receives a predetermined detailed task planned in advance by a central control management server (MES SCF/ERP) and performs a predetermined routine.

The autonomous mobile robot is typically a robot for a fleet management function, and is a mobile robot which moves to a destination by itself to carry large-sized goods, and is a robot optimized for picking to manage movements of a machine and enhance efficiency of picking. In addition, a robot having form in which two types of the robots are interchangeably according to purposes has been proposed.

Recently, a robot used in logistics and manufacturing sites is expanded from an automated guided vehicle (AGV) to an autonomous mobile robot (AMR), but the autonomous mobile robot has just a level of movement and obstacle avoidance utilizing a sensor, simple exception handling, pre-indicated routine mission performance, image recognition, and lidar signal processing.

The scale of logistics and manufacturing sites is increased, the number of autonomous mobile robots needed or operated increases, so it is necessary to be away from the conventional method of individually assigning tasks to the autonomous mobile robots by the existing central control management server and to propose a method of giving autonomy to the autonomous mobile robot to immediately respond to changes in overall logistics and manufacturing plans.

### Disclosure

### Technical Problem

Accordingly, the present invention has been made in view of the above-mentioned problems occurring in the related art, and it is an object of the present invention to provide a system and a method for controlling multiple robots capable of controlling a plurality of robots with respect to a leader robot of a arbitrarily configured robot group.

### Technical Solution

To accomplish the above-mentioned objects, according to the present invention, there is provided a method for controlling multiple robots comprising the steps of: configuring a plurality of robots to perform tasks in a field as a plurality of groups by a central control management server, and designating a certain robot included in each group as a leader robot; calculating a work goal for each group based on the entire task by the central control management server; and transmitting, by the central control management server, the calculated work goal for each group to the leader robot of each group, so that the leader robot of each group can allocate detailed tasks to be performed by the robots belonging to the corresponding group based on the calculated work goal for each group.

In an embodiment, in the step of designating a certain robot included in each group as a leader robot, the central control management server divides the field into a plurality of zones and configures groups to take charge of each zone.

In an embodiment, the group includes at least one among a transport mobile robot, an object classification and recognition robot, and an object stacking space recognition robot.

In an embodiment, the method further includes the steps of: determining whether a work goal change event occurs by the central control management server; in a case in which the work goal change event occurs, re-calculating the work goal for each group according to the work goal change by the central control management server; and transmitting, by the central control management server, the recalculated work goal for each group to the leader robot of each group so that the leader robot of each group reallocates detailed tasks to be performed by the robots belonging to the corresponding group according to the recalculated work goal for each group.

In an embodiment, provided is a method for controlling multiple robots including the steps of: designating a certain robot among a plurality of robots as a leader robot for a certain group from a central control management server, and receiving a control authority of robots belonging to the corresponding group from the central control management server; receiving, by the leader robot, a work goal of the corresponding group calculated based on the entire work from the central control management server; and allocating, by the leader robot, detailed tasks to be performed by the robots belonging to the corresponding group on the basis of the work goal of the corresponding group.

In an embodiment, the method further includes the steps of:
determining a work execution state in the group by the leader robot; transmitting, by the leader robot, redundant robot information to the central control management server in a case in which there is a redundant robot in the group; and requesting, by the leader robot, redundant robot information to the central control management server in a case in which the leader robot determines a redundant robot is needed in the group.

In an embodiment, the method further includes the steps of: in a case in which the leader robot determines that a redundant robot is needed in the group, requesting, by the leader robot, a redundant robot to a leader robot of another group; and transmitting, the leader robot of the other group, a control authority of the redundant robot to the leader robot when the leader robot of the other group determines whether there is a redundant robot and the redundant robot exists in the group.

In another aspect of the present invention, provided is a central control management server including: a server communication unit connected to a network to transmit and receive data; a group configuration unit which configures a plurality of robots to perform work in a field as a plurality of groups, and designates a certain robot included in each group as a leader robot; and a group work goal calculation unit which calculates a work goal for each group based on the entire task, and transmits the calculated work goal for each group to the leader robot of each group so that the leader robot of each group can allocate detailed tasks, which have to be performed by the robots belonging to the corresponding group, based on the calculated work goal for each group.

In another aspect of the present invention, provided is a robot including: a robot communication unit connected to a network to transmit and receive data; a driving unit including at least one wheel to move a robot; a sensing unit having one or more sensors configured to sense at least one among internal information of the robot, information on environment around the robot, and user information; and a robot control unit which is designated as a leader robot of a certain group from a central control management server, receives a control authority of robots belonging to the corresponding group, and when receiving a work goal of the corresponding group calculated based on the entire work from the central control management server, allocates detailed tasks to be performed by the robots belonging to the corresponding group on the basis of the work goal of the corresponding group, or controls to perform detailed task allocated from the leader robot.

In another aspect of the present invention, provided is a system for controlling multiple robots including: a central control management server, which configures a plurality of robots to perform tasks in a field as a plurality of groups, designates a certain robot included in each group as a leader robot, calculates a work goal for each group based on the entire task, and transmits the calculated work goal for each group to the leader robot of each group, so that the leader robot of each group can allocate detailed tasks to be performed by the robots belonging to the corresponding group based on the calculated work goal for each group; a leader robot which is designated as a leader robot for a certain group from the central control management server, when receiving from the central control management server a control authority of the robots belonging to the corresponding group and a work goal of the corresponding group calculated based on the entire work, allocates detailed tasks to be performed by the robots belonging to the corresponding group, on the basis of the work goal of the corresponding group; and a plurality of robots performing the detailed task allocated from the leader robot.

### Advantageous Effects

As described above, the system and a method for controlling multiple robots according to the present invention can control a plurality of robots with respect to a leader robot of a arbitrarily configured robot group.

### Description of Drawings

FIG. 1 is a diagram schematically illustrating a multi-robot control system according to an embodiment of the present invention.
FIG. 2 is a block diagram illustrating a configuration of a central control management server operating in the multi-robot control system according to an embodiment of the present invention.
FIG. 3 is a block diagram illustrating a configuration of a robot operating in the multi-robot control system according to an embodiment of the present invention.
FIG. 4 is a flow chart illustrating a method of controlling a plurality of robots performed by a central control management server according to an embodiment of the present invention.
FIG. 5 is a flow chart illustrating a method of controlling a plurality of robots performed by a leader robot according to an embodiment of the present invention.
FIG. 6 is a flow chart illustrating a task change event generation scenario according to an embodiment of the present invention.
FIG. 7 is a flow chart illustrating an inter-group robot relocation scenario according to an embodiment of the present invention.
FIG. 8 is a flow chart illustrating a redundant robot request scenario according to an embodiment of the present invention.

### Mode for Invention

Hereinafter, a preferred embodiment of the present invention will be described in detailed with reference to the accompanying drawings in order to clarify the technical spirit of the present invention. In the description of the present invention, when it is judged that detailed descriptions of known functions or structures related with the present invention may make the essential points vague, the detailed descriptions of the known functions or structures will be omitted. For components having substantially the same functional configuration of the figures, the same reference numerals and numbers are given to the elements having substantially the same functional configuration. For convenience of description, the apparatus and the method will be described together.

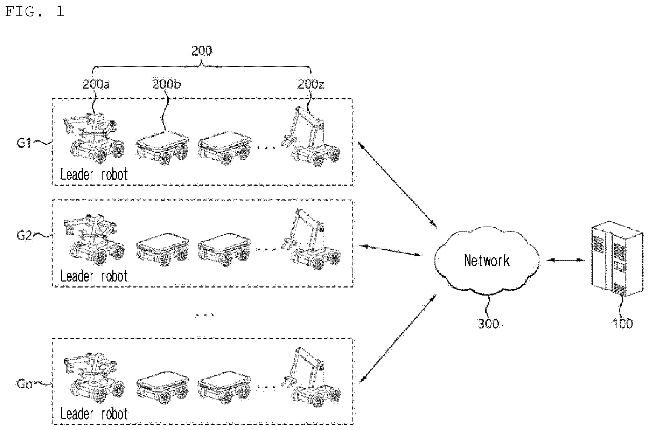

FIG. 1 is a diagram schematically illustrating a multi-robot control system according to an embodiment of the present invention.

Referring to FIG. 1, a multi-robot control system according to an embodiment of the present invention may include a central control management server 100, and a plurality of robots 200.

First, the plurality of robots 200, which are autonomous mobile robots having wheels and electric devices embedded therein, may serve to move or pick up heavy objects in logistics and manufacturing sites, but are not limited thereto.

For example, the plurality of robots 200 may be implemented as various types of mobile robots, such as a mobile robot for assembly having multi-joint dual arms and grippers capable of holding and transferring articles, a transport mobile robot having a tray on which articles can be loaded, a mobile robot for pick-up having a driving unit including multi-joint dual arms and grippers capable of holding and moving or manipulating articles, an object classification and recognition robot capable of recognizing and classifying objects, a space recognizing mobile robot capable of recognizing a space on which objects are stacked.

The plurality of robots 200 may refer to a machine that automatically performs or operates detailed tasks allocated by its own ability. Specifically, the plurality of robots 200 may be intelligent robots having a function of autonomously operating by recognizing and determining surrounding environment.

The central control management server 100 may perform various necessary operations by being connected to the plurality of robots 200, which will be controlled, through the network 300. In particular, the central control management server 100 may receive data or a control signal from the robot 200 and transmit the data or control signal to the robots 200.

The central control management server 100 may configure the plurality of robots 200 to perform a task in the field as a plurality of groups, designate a leader robot of each group, calculate a work target for each group based on the entire task, and transmit, to the leader robot of each group, the work target for each group calculated to allocate the detailed mission to be performed by the robots belonging to the corresponding group based on the calculated work target for each group.

In a case in which any robot among the plurality of robots 200 is designated as a of leader robot for a certain group, the leader robot may be designated as a leader robot for the certain group by the central control management server 100 to receive the control authority of the robots belonging to the corresponding group. When the leader robot receives a work goal of the corresponding group calculated on the basis of the entire work, the leader robot can allocate detailed tasks that the robots in the corresponding group have to perform according to the work goal given to the corresponding group.

In an embodiment, the central control management server 100 may map robots including at least one among at least one transport mobile robot, at least one object classification and recognition robot, and at least one object stacking space recognition robot as a virtual group.

In an embodiment, each group may include at least one among the transport mobile robot, the object classification and recognition robot, and the object stacking space recognition robot.

For example, as illustrated in FIG. 1, when it is assumed that the central control management server 100 configures the plurality of robots 200 to perform tasks in the field as a first group to n^{th} group (G1, G2, ..., Gn), the first group (G1) may include an object stacking space recognition robot 200a, a transport mobile robot 200b, and an object classification and recognition robot 200z, and the object stacking space recognition robot 200a among the robots included in the first group (G1) may be designated as a leader robot. In this instance, the object stacking space recognition robot 200a can monitor the work progress of the group while recognizing a space on which objects will be stacked. Here the leader robot 200a may receive a control authority to allocate and control detailed tasks to robots belonging to the corresponding group.

In an embodiment, a physical location of the central control management server 100 may be located in a public cloud or private cloud capable of utilizing cloud computing. In addition, the robot 200 may function as a leader robot by having a built-in function within an HW device with edge computing performance.

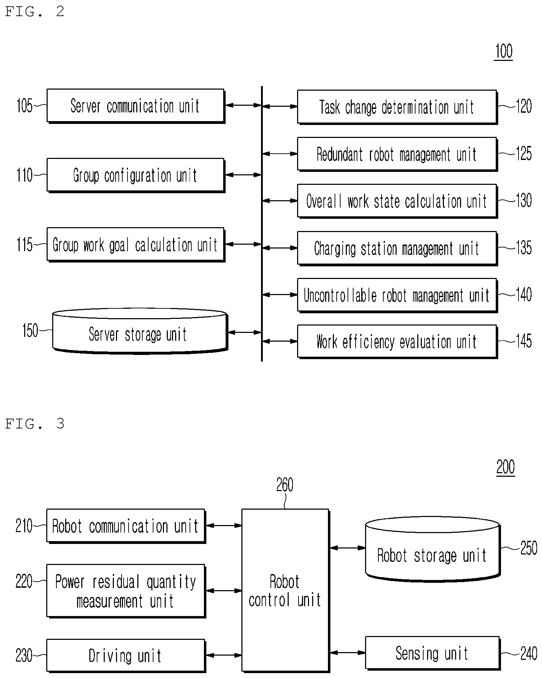

FIG. 2 is a block diagram illustrating a configuration of the central control management server operating in the multi-robot control system according to an embodiment of the present invention.

Referring to FIG. 2, the central control management server 100 according to an embodiment of the present invention may include a server communication unit 105, a group configuration unit 110, and a group work goal calculation unit 115. According to an embodiment, the central control management server 100 may further include a task change determination unit 120, a redundant robot management unit 125, an overall work state calculation unit 130, a charging station management unit 135, an uncontrollable robot management unit 140, a work efficiency evaluation unit 145, or a server storage unit 150.

The server communication unit 105 may be connected to the network 300 to exchange data with the robot. The server communication unit 105 may assign, to the leader robot of each group designated by the group configuration unit 110, a right to allocate detailed tasks to the robots belonging to the corresponding group and to control the robots belonging to the corresponding group. In addition, the server communication unit 105 may transmit the work goal for each group calculated by the group work target calculation unit 115 to the leader robot of each group.

In an embodiment, the server communication unit 105 may receive work state information for each group from the leader robot of each group, and transmit the entire work state calculated by the overall work state calculation unit 130 to the leader robot of each group.

The group configuration unit 110 may configure the plurality of robots to perform work in the field as a plurality of groups, and designate a certain robot included in each group as a leader robot. In this case, the group configuration unit 110 may assign, to the leader robot of each group designated by the group configuration unit 110, a right to allocate detailed tasks to the robots belonging to the corresponding group and to control the robots belonging to the corresponding group.

In an embodiment, the group configuration unit 110 may divide the field into a plurality of zones and designate a robot group responsible for each zone.

The group work goal calculation unit 115 may calculate a work goal for each group based on the entire task. The group work goal calculation unit 115 may transmit the calculated work goal for each group to the leader robot of each group so that the leader robot can allocate detailed tasks, which should be performed by the robots belonging to the corresponding group, based on the calculated work goal for each group.

In other words, the group work goal calculation unit 115 may calculate a work goal and details of each group based on the entire task according to the work goal calculation algorithm for each group, and transmit the calculated work goal and details to the leader robot of each group. The leader robot of each group may allocate detailed tasks to be performed by the robots belonging to the corresponding group, on the basis of the calculated work target for each group.

The task change determination unit 120 may determine whether a work goal change event occurs or not. In this case, the work goal change event may include all events that may change the entire work, such as a whole work schedule change, a material supply change, or the like. When the work goal change event occurs, the group work goal calculation unit 115 may re-calculate the work goal for each group according to the work goal change.

The redundant robot management unit 125 may manage redundant robot information of each group. The redundant robot management unit 125 may receive the redundant robot information from the leader robot of each group, and may transmit the redundant robot information to the leader robot requesting the redundant robot information.

The overall operation state calculation unit 130 may calculate the overall work state by using the work state information for each group received from the leader robot of each group. In addition, the overall operation state calculation unit 130 may transmit the calculated overall work state to the leader robot of each group through the server communication unit 110.

The charging station management unit 135 may manage the traffic of a charging station capable of charging a battery of the robot. That is, the charging station management unit 135 may manage whether the charging station has a charging place or how much the charging station management unit 135 has chargeable capacity, and the like.

The uncontrollable robot management unit 140 may manage a robot that is in a control disabled state due to a failure during work. The uncontrollable robot management unit 140 may receive and manage robot information that is in the control disabled state from the leader robot of each group.

The work efficiency evaluation unit 145 may self-evaluate the efficiency of the work goal calculation for each group after the entire work is completed. Accordingly, the work goal calculation algorithm for each group applied by the group work goal calculation unit 115 may be advanced.

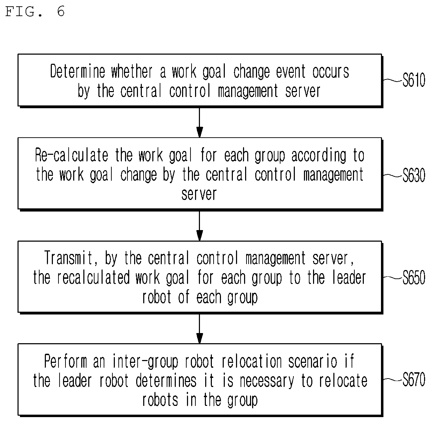

The server storage unit 150 may store data supporting various functions of the central control management server 100. The server storage unit 105 may store a scenario for entire work unit lifecycle management driven by the central control management server 100. In an embodiment, the server storage unit 150 may store data for performing operations according to a task change event occurrence scenario, an inter-group robot relocation scenario, and a redundant robot request scenario. The operation of each scenario will be described in detailed with reference to FIGS. 6 to 8.

FIG. 3 is a block diagram illustrating a configuration of the robot operating in the multi-robot control system according to an embodiment of the present invention.

Referring to FIG. 3, the robot 200 according to an embodiment of the present invention may include a robot communication unit 210, a driving unit 230, a sensing unit 240, a robot storage unit 250, and a robot control unit 260. According to an embodiment, the robot 200 may further include a power residual quantity measurement unit 220.

The robot communication unit 210 may be connected to the network 300 to transmit and receive data. The robot communication unit 210 may be designated as a leader robot by the central control management server 100 to receive a control authority to control robots in the corresponding group or transmit a command to perform detailed tasks to the robots in the corresponding group. In an embodiment, the robot communication unit 210 may request a redundant robot to a leader robot of other group or receive a request for a redundant robot from the other group leader robot according to the control of the controller 260. In a case in which the robot communication unit 210 is not designated as the leader robot, the robot communication unit 210 may receive a command to perform detailed tasks from the leader robot.

In an embodiment, the robot communication unit 210 may transmit state information including the power residual quantity information generated by the power residual quantity measurement unit 220 and driving information generated by the driving unit 230 and the sensing unit 240 to the leader robot according to the control of the robot control unit 260. The leader robot may transmit, to the central control management server 100, work execution information of the corresponding group obtained by collecting state information of the robots in the group.

The power residual quantity measurement unit 220 may measure the power of the battery mounted in the robot in real time. The battery mounted in the robot may be a rechargeable or replaceable battery. The rechargeable battery is rechargeable from the outside, and may be substituted with one of various types capable of supplying power, such as a lithium ion battery, a manganese battery, an alkaline battery, a silver oxide battery, a mercury cell, a nickel cadmium battery, a nickel hydrogen battery, a lead storage battery, a solar cell, a lithium polymer battery, and the like.

The driving unit 230 may include at least one wheel, and may move the robot 100. The driving unit 230 can move the robot 200 by moving the wheel using a power engine such as a motor that generates a rotational force, but is not limited to the driving method, and may be modified in various forms capable of moving the robot 200.

In addition, the driving unit 230 may perform a specific operation implemented in the robot 200. In an embodiment, the driving unit 230 may include a tray capable of loading an object, a camera capable of photographing surrounding environment, a multi-joint arm and a gripper capable of holding, moving and manipulating an object, and at least one among a multi-joint dual arm and a gripper capable of holding, moving and manipulating an object, but is not limited thereto. Accordingly, the operation of the driver 230 may be differently configured for each robot.

Here, the driving unit 230 may perform detailed tasks assigned thereto while moving the robot 200 based on the driving signal generated by the robot control unit 260.

The sensing unit 240 may include one or more sensors configured to sense at least one among internal information of the robot 200, information on environment around the robot 200, and user information. For example, the sensing unit 240 may be at least one among a position sensor (e.g., a GPS module), a proximity sensor, a weight detection sensor, an illuminance sensor, a touch sensor, an acceleration sensor, a magnetic sensor, a gravity sensor, a gyroscope sensor, a motion sensor, an RGB sensor, an infrared sensor, an ultrasonic sensor, an optical sensor (e.g., a camera), a microphone, a weight detection sensor, a battery gauge, an environmental sensor (e.g., a barometer, a hygrometer, a thermometer, a radiation detection sensor, a heat detection sensor, a gas detection sensor, etc.), a chemical sensor (e.g., an electronic nose, a healthcare sensor, a biometric sensor, etc.).

The robot storage unit 250 may store data supporting various functions of the robot 200. The robot storage unit 250 may store application programs or applications executed in the robot 200, data or instructions for operating the robot 200, and the like. Some of these application programs may be downloaded from an external server via wireless communication. In addition, the robot storage unit 250 may store in advance maps of the site or location coordinates of charging stations capable of charging the battery in the site where the robot is performing the detailed task.

Moreover, the robot storage unit 250 may store data for performing operations according to a task change event occurrence scenario, an inter-group robot relocation scenario, and a redundant robot request scenario.

The robot controller 260 may control the overall operation of the robot 200. The robot control unit 260 may be designated as a leader robot for a certain group from the central control management server 100. When the robot controller 260 receives the control authority of the robots belonging to the corresponding group and a work goal of the corresponding group calculated based on the entire work, the robot controller 260 may control to allocate detailed tasks to be performed by the robots belonging to the corresponding group, on the basis of the work goal of the corresponding group. Alternatively, the robot controller 260 may be controlled to perform the detailed task allocated by the leader robot. To this end, the robot 200 according to an embodiment of the present invention may be equipped with an autonomous driving function.

In an embodiment, the robot control unit 260 may be controlled to transmit information generated by the power residual quantity measurement unit 220, the driving unit 230, and the sensing unit 240 to the leader robot through the robot communication unit 210. When the leader robot receives state information from the robots in the corresponding group, the leader robot may be controlled to transmit the work execution information of the corresponding group, which is obtained by collecting the state information of the robots in the group, to the central control management server 100.

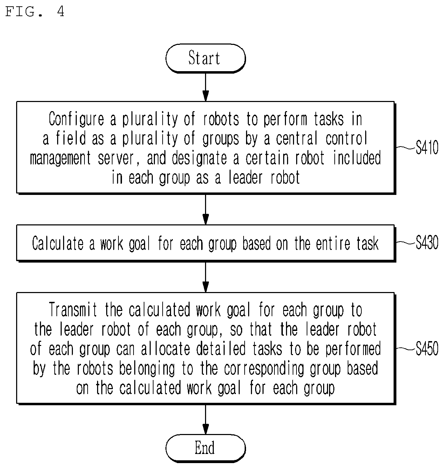

FIG. 4 is a flow chart illustrating a method of controlling a plurality of robots performed by a central control management server according to an embodiment of the present invention.

Referring to FIG. 4, the central control management server 100 may configure a plurality of robots 100 to perform tasks in a field as a plurality of groups, and designate a certain robot included in each group as a leader robot (S410).

In an embodiment, the group may include at least one among a transport mobile robot, an object classification and recognition robot, and an object stacking space recognition robot. For example, the first group may include the transport mobile robot, the object classification and recognition robot, and the object stacking space recognition robot, and designate the object stacking space recognition robot among the robots included in the first group as a leader robot.

In an embodiment, the central control management server 100 may divide the field into a plurality of zones and configure a group to be in charge of each zone.

Thereafter, the central control management server 100 may calculate a work goal for each group based on the entire task (S430). For example, in a case in which the entire work is vehicle manufacturing work, the central control management server 100 may calculate a work goal for each group, such as a wheel assembly for the first group, and a vehicle body assembly for the second group.

Thereafter, the central control management server 100 may transmit the calculated work goal for each group to the leader robot of each group, so that the leader robot of each group can allocate detailed tasks to be performed by the robots belonging to the corresponding group based on the calculated work goal for each group (S450).

In an embodiment, the central control management server 100 may receive the work execution information from the leader robot of each group and calculate the overall work progress state. The central control management server 100 may transmit the calculated overall work progress state to the leader robot of each group.

In an embodiment, the central control management server 100 may evaluate the efficiency of the work goal calculation for each group after the entire work is completed. Accordingly, the work goal calculation algorithm for each group may be advanced. When the entire work is terminated, the central control management server 100 may wait for the next task.

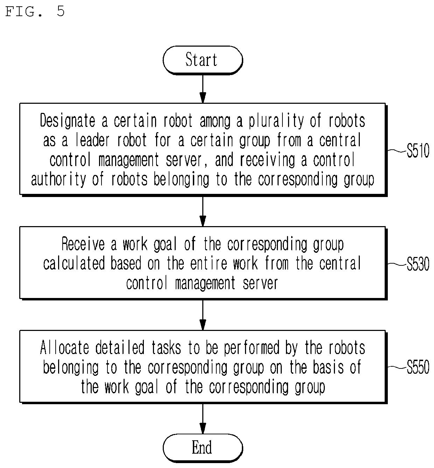

FIG. 5 is a flow chart illustrating a method of controlling the plurality of robots performed by the leader robot according to an embodiment of the present invention.

Referring to FIG. 5, a certain robot among the plurality of robots is designated as a leader robot for a certain group by the central control management server 100, and receives a control authority of the robots belonging to the corresponding group (S510). For example, in a case in which the first group includes first to fifth robots, the first robot is designated as a leader robot for the first group by the central control management server 100, and receives a control authority to control the second to fifth robots belonging to the first group from the central control management server 100.

The leader robot may receive a work goal of the corresponding group calculated based on the entire work from the central control management server 100 (S530). For example, the first robot, which is the leader robot for the first group, may receive the work goal of the first group, which is called a 'wheel assembly', from the central control management server 100.

The leader robot may allocate detailed tasks to be performed by the robots belonging to the corresponding group on the basis of the work goal of the corresponding group (S550). For example, in a case in which the leader robot receives a task goal of wheel assembly from the central control management server 100, the leader robot may allocate detailed tasks, such as, wheel transport to the first robot, wheel pickup to the second robot, wheel assembly to the third robot in the corresponding robot.

The plurality of robots 200 may perform tasks assigned to each group before a task change event occurs. The central control management server 100 and the leader robot may process an optimal robot operation to achieve the goal of each group, for instance, inter-group rearrangement, redundant robot acquisition, or the like according to a task change event or a work progress state of each group. The above will be described in detailed with reference to FIGS. 6 to 8.

FIG. 6 is a flow chart illustrating a task change event generation scenario according to an embodiment of the present invention.

Referring to FIG. 6, the central control management server 100 may determine whether a work goal change event occurs (S610). In this case, the work goal change event may include all events that may change the entire work, such as a whole work schedule change, a material supply change, or the like.

In a case in which the work goal change event occurs, the central control management server 100 may re-calculate the work goal for each group according to the work goal change (S630).

The central control management server 100 may transmit the recalculated work goal for each group to the leader robot of each group (S650). The leader robot of each group may reallocate detailed tasks to be performed by the robots belonging to the corresponding group according to the recalculated work goal for each group. Here, the central control management server 100 may transmit the recalculated work goal for each group, but the present invention is not limited thereto, and only the work target change history may be transmitted to the leader robot.

In a case in which it is necessary to perform the robot relocation in the group according to the occurrence of the task change event, the leader robot may perform the inter-group robot relocation scenario (S670).

In an embodiment, the leader robot of each group may determine whether the robot relocation in the group is required after determining an influence by the recalculated work goal of the corresponding group. For example, the leader robot may determine whether the robot relocation in the group is required after determining at least one among an estimated work completion time, whether it is possible to reallocate detailed tasks, and whether a redundant robot is required according to the work goal change information.

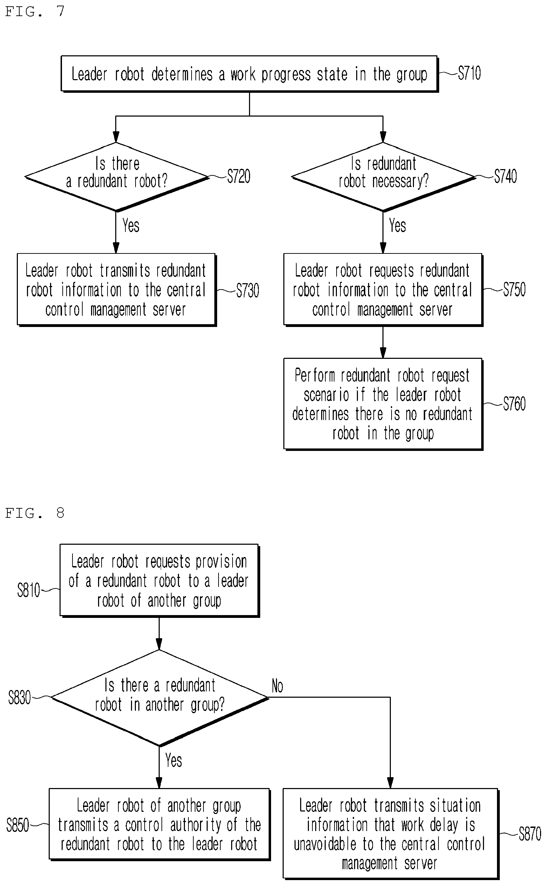

FIG. 7 is a flow chart illustrating an inter-group robot relocation scenario according to an embodiment of the present invention.

Referring to FIG. 7, the leader robot may determine a work progress state in the group (S710). In this case, the leader robot may determine whether there is a redundant robot or whether a redundant robot is required according to the work progress state in the group.

In a case in which there is a redundant robot in the group (S720), the leader robot may transmit redundant robot information to the central control management server 100 (S730) . In this case, the leader robot may determine that the redundant robot has occurred when the robots in the group initially achieve the allocated detailed tasks due to a task change event or the like.

If the leader robot determines that a redundant robot in the group is necessary (S740), the leader robot may request a redundant robot information to the central control management server 100 (S750). The leader robot may determine that the redundant robot is required when there is a possibility of work delay, when there is a robot which is short of battery power, or when there is an uncontrollable robot. In this instance, the leader robot may request, to the central control management server, a redundant robot to substitute for the robot which is short of battery power, a robot to substitute for the uncontrollable robot, or a robot to complete the task until a target time point.

If the leader robot cannot make up for a redundant robot in the group, the leader robot may perform a redundant robot request scenario (S760).

FIG. 8 is a flow chart illustrating a redundant robot request scenario according to an embodiment of the present invention.

Referring to FIG. 8, if the leader robot determines it is necessary to request a redundant robot, the leader robot may request a redundant robot to the other group leader robot (S810).

In a case in which the leader robot of the other group determines whether there is a redundant robot in the group and there is a redundant robot in the group (S830), the leader robot of the other group may transmit a control authority of the redundant robot to the leader robot (S850).

If there is no redundant robot in the group, the leader robot may transmit situation information that group work delay is unavoidable to the central control management server.

As described above, according to an embodiment of the present invention, a role regulation of a group unit (switch, import, and divide), or group relocation of robots belonging to each group may be progressed through communication among leader robots of the groups.

As described above, FIGS. 6 to 8 illustrate flow charts showing a task change event occurrence scenario, an inter-group robot relocation scenario, and a redundant robot request scenario, and a context between the scenarios may be established.

The system and a method for controlling multiple robots according to an embodiment of the present invention partially ensures autonomy in work performance of leader robots of groups so that the leader robots of the robot groups operating in the field can cope with an event without a process of delivering the event to all robots even if an important event occurs in the central control management server and there is an unavoidable entire work change, thereby enhancing overall productivity and usefulness.

The present invention has been described in detail with reference to the preferred embodiments shown in the drawings. The embodiments are not intended to limit the present invention but are merely illustrative, and are to be considered in terms of illustrative aspects rather than limiting. The true technical protection scope of the present invention should be determined by the technical spirit of the appended claims rather than the above description. Although specific terms are used in the present specification, it is only used for the purpose of describing the concept of the present invention and is not used to limit the scope of the present invention set forth in the claims. Each step of the present invention does not necessarily have to be performed in the order described, and can be performed in parallel, selectively, or individually. It will be understood by those skilled in the art that various modifications and other equivalents are possible within the scope of the present invention. It should be understood that equivalents include all components of not only currently known equivalents but also equivalents to be developed in the future, having the same function regardless of the structure.

### <Explanation of Reference Numerals>

100: Central control management server 105: server communication unit
110: Group configuration unit 115: Group work goal calculation unit
120: Task change determination unit 125: Redundant robot management unit
130: Overall work state calculation unit 135: Charging station management unit
140: Uncontrollable robot management unit 145: Work efficiency evaluation unit
150: Server storage unit 200: Robot
210: Robot communication unit 230: Driving unit
240: Sensing unit 250: Robot storage unit
260: Robot control unit 300: Network

## Claims

1. A method for controlling multiple robots comprising the steps of:
configuring a plurality of robots to perform tasks in a field as a plurality of groups by a central control management server, and designating a certain robot included in each group as a leader robot;
calculating a work goal for each group based on the entire task by the central control management server; and
transmitting, by the central control management server, the calculated work goal for each group to the leader robot of each group, so that the leader robot of each group can allocate detailed tasks to be performed by the robots belonging to the corresponding group based on the calculated work goal for each group.

2. The method according to claim 1, wherein in the step of designating a certain robot included in each group as a leader robot, the central control management server divides the field into a plurality of zones and configures groups to take charge of each zone.

3. The method according to claim 1, wherein the group includes at least one among a transport mobile robot, an object classification and recognition robot, and an object stacking space recognition robot.

4. The method according to claim 1, further comprising the steps of:
determining whether a work goal change event occurs by the central control management server;
in a case in which the work goal change event occurs, re-calculating the work goal for each group according to the work goal change by the central control management server; and
transmitting, by the central control management server, the recalculated work goal for each group to the leader robot of each group so that the leader robot of each group reallocates detailed tasks to be performed by the robots belonging to the corresponding group according to the recalculated work goal for each group.

5. A method for controlling multiple robots comprising the steps of:
designating a certain robot among a plurality of robots as a leader robot for a certain group by a central control management server, and receiving a control authority of robots belonging to the corresponding group from the central control management server;
receiving, by the leader robot, a work goal of the corresponding group calculated based on the entire work from the central control management server; and
allocating, by the leader robot, detailed tasks to be performed by the robots belonging to the corresponding group on the basis of the work goal of the corresponding group.

6. The method according to claim 5, further comprising the steps of:
determining a work execution state in the group by the leader robot;
transmitting, by the leader robot, redundant robot information to the central control management server in a case in which there is a redundant robot in the group; and
requesting, by the leader robot, redundant robot information to the central control management server in a case in which the leader robot determines a redundant robot is needed in the group.

7. The method according to claim 5, further comprising the steps of:
in a case in which the leader robot determines that a redundant robot is needed in the group, requesting, by the leader robot, a redundant robot to a leader robot of another group; and
transmitting, the leader robot of the other group, a control authority of the redundant robot to the leader robot when the leader robot of the other group determines whether there is a redundant robot and the redundant robot exists in the group.

8. A central control management server comprising:
a server communication unit connected to a network to transmit and receive data;
a group configuration unit which configures a plurality of robots to perform work in a field as a plurality of groups, and designates a certain robot included in each group as a leader robot; and
a group work goal calculation unit which calculates a work goal for each group based on the entire task, and transmits the calculated work goal for each group to the leader robot of each group so that the leader robot of each group can allocate detailed tasks, which have to be performed by the robots belonging to the corresponding group, based on the calculated work goal for each group.

9. A robot comprising:
a robot communication unit connected to a network to transmit and receive data;
a driving unit including at least one wheel to move a robot;
a sensing unit having one or more sensors configured to sense at least one among internal information of the robot, information on environment around the robot, and user information; and
a robot control unit which is designated as a leader robot of a certain group from a central control management server, receives a control authority of robots belonging to the corresponding group, and when receiving a work goal of the corresponding group calculated based on the entire work from the central control management server, allocates detailed tasks to be performed by the robots belonging to the corresponding group on the basis of the work goal of the corresponding group, or controls to perform detailed task allocated from the leader robot.

10. A system for controlling multiple robots comprising:
a central control management server, which configures a plurality of robots to perform tasks in a field as a plurality of groups, designates a certain robot included in each group as a leader robot, calculates a work goal for each group based on the entire task, and transmits the calculated work goal for each group to the leader robot of each group, so that the leader robot of each group can allocate detailed tasks to be performed by the robots belonging to the corresponding group based on the calculated work goal for each group;
a leader robot which is designated as a leader robot for a certain group by the central control management server, when receiving from the central control management server a control authority of the robots belonging to the corresponding group and a work goal of the corresponding group calculated based on the entire work, allocates detailed tasks to be performed by the robots belonging to the corresponding group, on the basis of the work goal of the corresponding group; and
a plurality of robots performing the detailed task allocated from the leader robot.
